Europäisches Patentamt

European Patent Office

Office européen des brevets

(11) Publication number: **0 191 052 B1**

(12) **EUROPEAN PATENT SPECIFICATION**

(45) Date of publication of patent specification: **05.05.93**

(51) Int. Cl.⁵: **H01C 1/012**, H01C 3/04, H01C 7/02, H01C 7/04, C23C 14/00

(21) Application number: **85903923.2**

(22) Date of filing: **25.07.85**

(86) International application number:
**PCT/US85/01398**

(87) International publication number:
**WO 86/01027 (13.02.86 86/04)**

(54) Platinum Resistance Thermometer and Method for Forming a Platinum Resistance Thermometer.

(30) Priority: **31.07.84 US 636141**
**31.07.84 US 636142**

(43) Date of publication of application:
**20.08.86 Bulletin 86/34**

(45) Publication of the grant of the patent:
**05.05.93 Bulletin 93/18**

(84) Designated Contracting States:
**BE DE FR GB IT NL SE**

(56) References cited:
**DE−A− 2 706 418**      **FR−A− 2 188 158**
**GB−A− 2 096 645**      **US−A− 4 050 052**
**US−A− 4 072 593**      **US−A− 4 103 275**
**US−A− 4 129 848**      **US−A− 4 286 377**

**COURSE MANUAL FOR THE AMERICAN VACUUM SOCIETY, 1981; "Sputter depositions and ion beam processes"**

(73) Proprietor: **ROSEMOUNT INC.**
**12001 West 78th Street**
**Eden Prairie, MN 55344(US)**

(72) Inventor: **BOHARA, Robert, C.**
**16755 Terry Pines Drive**
**Eden Prairie, MN 55344(US)**
Inventor: **RUF, James, A.**
**7371 Berkshire Way**
**Maple Grove, MN 55369(US)**

(74) Representative: **Cross, Rupert Edward Blount et al**
**BOULT, WADE & TENNANT 27 Furnival Street London EC4A 1PO (GB)**

CHEMICAL ABSTRACTS, vol. 91, no. 26, 24th December 1979, page 616, abstract no. 220426n, Columbus, Ohio, US; M. HECO et al.: "Effect of oxygen on crystallographic properties of platinum films deposited by reactive sputtering", & VIDE, COUCHES MINCES 1979, 196, Suppl., 69–77

CHEMICAL ABSTRACTS, vol. 97, no. 18, 1st November 1982, page 689, abstract no. 154621t, Columbus, Ohio, US; V.A. ZAVAD–SKII: "Preparation of gallium phosphide–based matrix epitaxial structures", & TEKH–NOL. POLUCH. ELEKTR. SVOISTVA SOEDIN. A3B5, MATER. VSES. KONF. 1981, 47–51

**Description**

BACKGROUND OF THE INVENTION

1. Field of the Invention.

The present invention relates to methods of forming resistance thermometers that are easily made in a batch process and provide the desired characteristics.

2. Description of the Prior Art.

Thin film platinum resistance thermometers are gaining acceptance, but there is a problem with obtaining the desired temperature coefficient of resistance (TCR) of the thermometer, and also, in order to obtain the desired nominal resistance, for example 100 ohms, a platinum resistance element formed as a strip or ribbon of substantial continuous lengths made in a serpentine pattern of side by side strip sections. Making a thermometer which has a desired overall small size is difficult. The physical dimensions of the thermometer must be precisely defined so that individual strip or ribbon sections can be placed close to each other, and the platinum strip or ribbon should have a uniform grain from edge to edge, and be free of contaminants to maximize the resistivity of the thermometer.

A process for producing a resistance thermometer element is disclosed in United Kingdom Patent Application 2,096,645, published 20 October 1982. Magnetron sputtering under selected atmospheres is disclosed. The thermometer strip deposited is laser trimmed or scribed to define the size of the resistive strip. Controlling the atmosphere is emphasized in this publication in order to obtain a satisfactory thermometer.

United States Patent No. 4,072,593, issued to Diehl et al. on February 7, 1978, discloses a process for reduction in size of a resistance element for resistance thermometers. A platinum layer is sputtered onto an insulating solid, using a commerical RF sputtering apparatus and including forming "meanders" by means of a laser beam so that the resistance was standardized to 100 ohms. This patent discloses methods of sputtering platinum onto a substrate, but does not suggest the use of a path defined in a separate liftoff material to obtain a desired resistance thermometer. The thermometer, after being formed with the desired pattern by a laser beam (or by photo etching) is tempered or heat treated.

United States Patent No. 4,181,755, issued to Liu on January 1, 1980 discloses a way of generating a thin film pattern using a self lifting technique. The process involves depositing a continuous layer of circuit film onto the surface of the substrate, and then a photo resist pattern coincident with the ultimately desired circuit film pattern is defined on the surface of the circuit film. The portion of the circuit film not covered by photo resist is then removed. While retaining the photo resist and the remaining circuit film, the entire surface of the substrate is coated with a barrier film. The photo resist is then stripped away from the surface of the circuit film causing the barrier film that covers the circuit, to liftoff, causing the circuit film to be exposed. The circuit film pattern is then surrounded by a barrier film pattern. The device is used for making a Schottky barrier diode. In this instance, the barrier film is lifted off from a previously deposited conductor, and the patent does teach or suggest defining a platinum resistive path in an inert liftoff medium, depositing platinum material in the path and then etching away the liftoff medium to leave the thermometer in place.

U.S. Patent No. 4,353,935, issued to Symersky on October 12, 1982 discloses a method of manufacturing a device having a conductor pattern that utilizes a liftoff technique to define at least one conductor. A multi layer mask is required, and in the preferred embodiment the masking layer uses three sublayers of different materials, but it does provide recesses in the masking layer in the form of the conductive pattern that is to be provided. Etching is used, to expose part of the body surface through the masking layers, and then the conductive layer is deposited on both the masking layer and the exposed surface. The patent does not disclose the use of an inert material as a liftoff medium in which a thermometer pattern is formed and which liftoff material is removed after the platinum thermometer is deposited.

United States Patent No. 4,085,398, issued to Bertram et al. on April 18, 1978 discloses a thin film resistance temperature detector using a copper mask, which is not useful in the present process, which requires an inert liftoff material. Other prior art of interest includes United States Patent No. 4,103,275, issued to Diehl et al. on January 25, 1978 which discloses ionic etching for obtaining a resistance element for resistance thermometers, and United States Patent No. 4,129,848, issued to Frank et al. on December 12, 1978 which discloses a platinum film resistor device which has a layer of quartz deposited upon an insulative substrate, which is sputter etched to produce etch pits in the surface for defining a path of the platinum thermometer. Chemical etching to expose the platinum for sputter etching away excessive platinum is disclosed.

United States Patent No. 4,050,052, issued to Reichelt on September 20, 1977, also discloses a temperature measuring resistor structure, comprising a resistance thermometer, having a strip of platinum applied to a carrier in a predetermined pattern, and discloses depositing the platinum strip while the temperature of the substrate is in the range of $500-900°C$. This patent also discloses heat treatment, but does not disclose any way of obtaining a sharply defined path as with the present process.

The prior art methods all tend to introduce impurities and cause the loss of definition at the edges of the platinum, thus affecting the TCR of the thermometer. For example, laser fabricating tends to melt the edges of the strip; photo etching gives impurities; ionic and sputter etching silicon or silicon dioxide causes deposition of this material into the platinum as impurities, and the platinum structure is affected or damaged at its edges so that there is a loss of definition. Use of masking in present techniques to etch away the platinum film in unwanted areas is a problem because the pattern cannot reasonably be defined with desired precision and uniformity for obtaining a small size and close spacing of the strip sections. The present masking layers tend to deteriorate before the process is complete and impurities tend to be introduced into the platinum.

Chapter VI of the "Course Manual for the American Vacuum Society" 1981 relates to the deposition of metal coatings by sputtering. The influence of substrate temperature, gas pressure and other parameters on the structure of the sputtered metal coating is disclosed. Structures may be identified which consist of columnar grains separated by distinct dense intercrystalline boundaries.

## SUMMARY OF THE INVENTION

A thin film resistance thermometer is formed on a suitable substrate which is substantially inert with respect to the resistance thermometer material. Preferably the resistance material is platinum, deposited on a substrate, such as sapphire, using known techniques which are selected to provide high purity platinum, which is deposited so as to have a columnar grain pattern throughout the thermometer strip or path. The resistance thermometer material is formed in a strip having a meander or serpentine pattern by means of a liftoff process to obtain the desired resistance using as small a surface section as possible.

To manufacture the thermometer, an electrically insulating substrate having a generally flat surface is provided. The substrate surface, is cleaned, and a raised layer of material that is readily etched away is formed as by deposition on the substrate. This material is called a liftoff medium and the medium must be substantially inert with respect to the platinum and substantially noncontaminating to the platinum. The desired pattern is formed as a recessed path in the liftoff medium. The surface of the substrate is exposed in the formed path, where it is desired to deposit the platinum thermometer strip.

Platinum is then deposited onto the substrate in the etched path, where the substrate is exposed, and also over the outer surface of the remaining liftoff medium, to a desired thickness. The depositing of platinum is preferably done by known sputtering techniques and under conditions necessary to obtain a continuous strip of substantially uniform and substantially pure columnar grain platinum suitably affixed to the substrate.

The layer of liftoff material is formed with sharply defined edge surfaces on the perimeter of the path defined for the platinum thermometer. The edge surfaces of the path are substantially normal to the substrate surface and this permits the columnar grain pattern of the platinum to form all the way to the side edges of the thermometer strip.

The deposited layer of platinum tends to be thin adjacent the upper edges of the perimeter of the path formed in the liftoff material. A thin band of platinum is thus formed above the thermometer strip extending to the outer surface of the liftoff medium. These thin bands of platinum are porous when compared to the material deposited in the thermometer path. The thin bands thus permit liquid etch material to penetrate the platinum to act on the liftoff material, and the liftoff material is then etched away. The platinum deposited on the liftoff material and remaining outside the desired thermometer path pattern is then unsupported and easily removed, leaving the platinum in the desired meander or serpentine pattern. The thermometer is a continuous strip or ribbon of substantially uniform crystal structure from edge to edge on the strip or ribbon forming the thermometer. The edge surfaces of the path formed in the liftoff material are substantially normal to the substrate, such that the cross section of the thermometer strip is substantially rectangular and well defined without sharp or significant lateral protrusions or irregularities.

By using a liftoff medium and substrate which are substantially inert with respect to platinum, the purity of the platinum at the edges of the strip formed is maintained throughout its length.

The resulting structure of the platinum is well defined columnar grains which provide a dense, uniform pattern, thus minimizing the size of the platinum resistance thermometer for obtaining the same resistance compared to a noncolumnar grain strip. Since there are no sharp irregularities or sharp lateral protrusions from the sides of each path, (the liftoff medium defines smooth edge surfaces perpendicular to the substrate) the paths may be placed close together.

Impurities in the platinum and defects in the grain structure of the platinum have adverse affects upon the Temperature Coefficient of Resistance (TCR) of the platinum. The disclosed columnar grained structure of the platinum strip, which is uniform and substantially pure from edge to edge of the strip cross section, results in much greater control of the TCR of the platinum pattern. Thus yield of platinum resistance thermometers that achieve the required standard TCR of 3850 parts per million are greatly increased. Batch to batch variations are greatly reduced because of the control of structure and impurities.

BRIEF DESCRIPTION OF THE DRAWINGS

Figure 1 is an enlarged scale schematic diagram of a typical platinum resistance thermometer having a serpentine platinum strip pattern made according to the present invention defined on a substrate;

Figure 2A is a greatly enlarged vertical sectional view of a portion of a typical substrate used for forming a resistance thermometer according to the present invention;

Figure 2B is a sectional view corresponding to Figure 2A, with a layer of liftoff medium shown deposited on an upper surface of the substrate with the thickness of the liftoff medium greatly exaggerated for clarity of illustration;

Figure 2C is a sectional view corresponding to Figure 2B showing a further step of processing including the deposition of a photo resist material after a desired path pattern has been exposed on the photo resist, and developed leaving the strip pattern in the photo resist over the outer surface of the liftoff medium;

Figure 2D is a sectional view corresponding to Figure 2C after the underlying liftoff medium has also been chemically etched in the areas not protected by photo resist, to define a serpentine path on the substrate for deposition of a platinum thermometer strip in such path;

Figure 2E is a sectional view corresponding to Figure 2D after the photo resist layer has been removed from the remaining liftoff medium, showing the substrate ready for deposition of the platinum thermom – eter material in the defined path;

Figure 2F is a sectional view corresponding to Figure 2E after deposition of a layer of platinum material by a sputtering process;

Figure 2G is a sectional view of the finished platinum resistance thermometer showing the platinum meander paths in section, and corresponding to Figure 2F, after the liftoff medium has been etched away and the platinum material deposited on the upper surface of the liftoff material has been removed; and

Figure 3 is a detailed enlarged cross section representation of a platinum strip defined on the substrate in accordance with the present invention.

DETAILED DESCRIPTION OF THE PREFERRED EMBODIMENTS

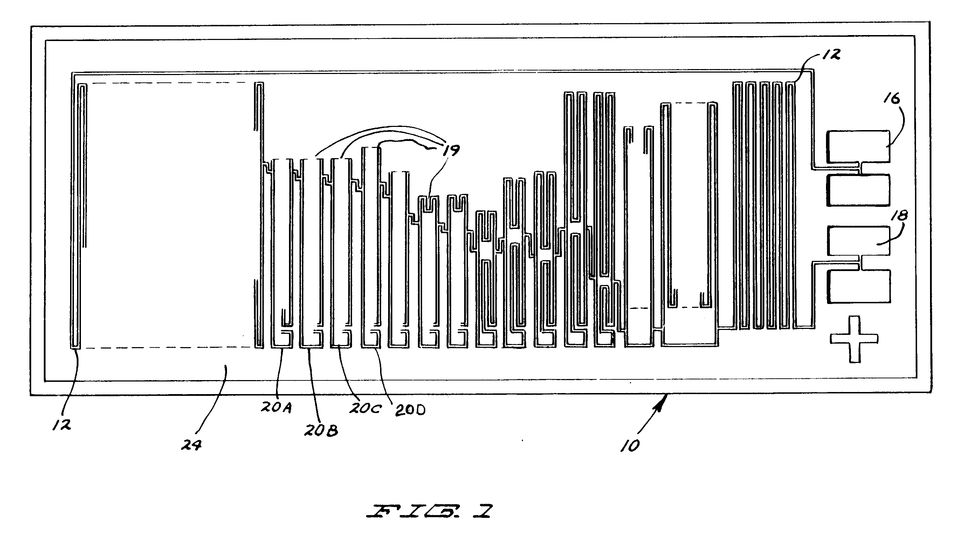

A batch fabricated platinum thin film resistance thermometer is indicated generally at 10 in Figure 1. A platinum resistive strip or ribbon 12 is defined on a substrate 24 in a continuous, serpentine or meander path which is of length to provide a desired resistance utilizing a small, low mass substrate to improve temperature response characteristics. A requirement of thermometer 10 is that it has an industry standard Temperature Coefficient of Resistance (TCR) of approximately 3850 parts per million (ppm) such as listed in DIN (German standard) 43760 or BS (British standard) 1904. Thermometer 10 may typically have a resistance of 100 ohms, although other resistance values also are standard, measured between a pair of electrical contacts 16 and 18 which are at the respective opposite ends of the strip 12. The thermometer desirably has a TCR of 3850 ppm ± 3 ppm. The strip or ribbon 12 is formed in strip sections at least some of which sections can be trimmed out of the resistance strip to permit trimming the resistance value to a given resistance and tolerance after fabrication.

Several resistive adjustments are provided for by severing the conductive strip 12 at selected locations indicated generally at 20A – 20D. Selection and severing the conductive strip patterns at such locations is performed in a conventional manner to obtain the desired resistance value of 100 ohms or other specified value.

In the preferred embodiment showing severance of a conductive path 20A selectively eliminates one section of conductive path of the selected several pairs of parallel conductive path sections 19. Different conductive strip sections 19 are of different resistance values to provide for coarse and fine adjustment to obtain the desired overall resistance. Preferably, the conductive path sections 19 are physically separated from the trimmable conductive path sections indicated at 20A − 20D such that impurities introduced while severing them have little or no effect on the desired TCR or on the other desired resistive characteristics. Preferably, severing is performed by means of laser trimming.

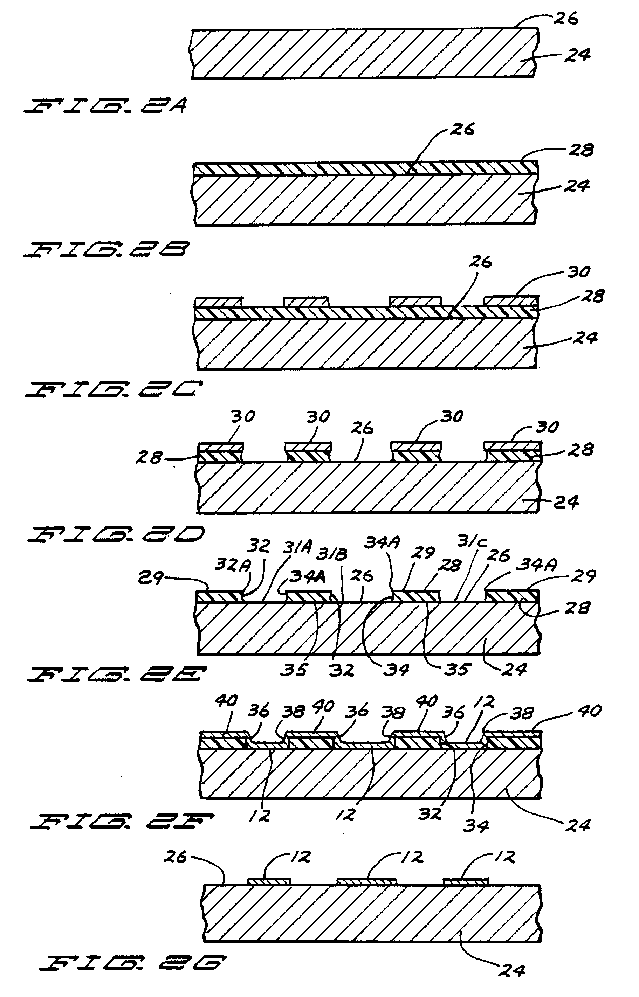

Formation of the platinum strip 12 is done by defining a path in which platinum is deposited as described with reference to Figures 2A through 2G, which are of greatly enlarged scale. In Figure 2A a section of substrate is shown in cross section. The substrate 24 is a non−conductive material which is substantially inert with respect to platinum over a wide temperature range and in reactive atmospheres or environments such as epitaxial grade (high purity) sapphire or aluminum oxide (alumina). Substrate 24 is relatively thin (vertical height), but has sufficient strength to support the serpentine platinum strip However, the substrate 24 for each thermometer has a low mass for fast temperature response and high strength for ruggedness.

A preferred material is high purity sapphire having a polished surface 26. A ceramic alumina substrate or other materials having similar qualities can also be used. To remove potential impurities which interfere with adhesion and structure formation, the surface 26 of substrate 24 is cleaned in a sulphuric acid/hydrogen peroxide solution.

After cleaning the surface 26 of the substrate 24, a layer of material 28 is deposited on the surface 26. This material is called a lift−off medium. The lift−off medium 28 preferably is a material such as silicon dioxide, which is substantially inert with respect to platinum. In a preferred step, the lift−off material 28 is chemical vapor deposited to a preferred depth of about 2500nm (25000 Angstroms) onto the clean substrate surface 26 using a substantially pure tetra ethyl ortho silicate (TEOS) or substantially pure oxygen and silane sources. This chemical vapor deposition process provides a layer of substantially pure silicon dioxide, with very few atoms of free silicon which could later contaminate the platinum during deposition. A silicon nitride lift−off medium or other inert lift−off medium will also function as the lift−off medium so long as the material selected does not react with platinum or with the atmosphere used when the platinum is deposited, or tend to introduce impurities in the platinum or lose shape during platinum deposition.

As shown in Figure 2C, a layer of photo resist 30, such as type KTI 747R, is next applied on top of the layer of liftoff medium 28. The photo resist is then exposed using a conventionally prepared negative mask, forming the desired serpentine or meander pattern for the path in which the platinum strip is deposited. The photo resist is then developed, and rinsed to expose the surface of liftoff medium 28 in the pattern or path which is the desired platinum path or pattern. The photo resist is exposed and developed preferably using stoddard solvent followed by an n−butyl acetate rinse, in a known manner, which does not introduce impurities which could have an adverse effect on the TCR of the subsequently deposited platinum.

A silicon oxide etch is then used to etch away the liftoff medium in the path pattern established in the photo resist. The etching is continued sufficiently long so that the substrate surface 26 is exposed in the desired platinum thermometer path, as shown in section in Figure 2D.

A plasma resist strip or chemical strip is then used to remove photo resist layer 30 from the remaining liftoff medium 28 which is the negative pattern used to define the thermometer path as shown in Figure 2E. It is important that all photo resist be removed at this stage in the process as it is a source of impurities that could contaminate the platinum that is deposited.

As stated, the liftoff medium 28 is preferably substantially pure silicon dioxide in the negative pattern with no free silicon, which is a potential impurity. Thus, care in using the known techniques to achieve the highest purity of the liftoff medium is desired.

The substrate surface 26 in the exposed path portions shown at 31A, 31B and 31C in Figure 2E is now ready for deposition of platinum, the resistance thermometer material. Edge surfaces 32 and 34 of the continuous thermometer path are spaced to define the required width of the platinum strip. Edge surfaces 32 and 34 will be generally normal to the substrate surface and they are smooth, but are slightly concave due to the oxide etch acting on medium 28 along the sides of the path. However the lines or edges 32A and 34A (Figure 2E) between the side surfaces of the path and the upper surface 29 of the remaining portions of the liftoff medium are sharp and well defined. The surfaces 32 and 34 are substantially planar and the undercutting amounts to only a slight bow in the cross section. Both the liftoff medium and the substrate must be inert with respect to platinum and are also chemically, and dimensionally, stable in platinum sputtering environments so that neither the liftoff medium 28 nor substrate 24 will diffuse into or react with the platinum.

As shown in Figure 2F, a layer of platinum is then sputter deposited in a desired manner which may be as taught in United Kingdom Patent Application of Rosemount Engineering Company Limited No. 2096645B and published 31 October 1984, or as disclosed in U.S. Patent No. 4,072,593, issued February 7, 1978 to Diehl, onto the exposed surface 26 of substrate 24 in the path and also across line 32A and 34A onto the surface 29 of the remaining liftoff medium 28. Because care in the platinum deposition is important, reference is made to desired techniques outlined in a course manual for the American Vacuum Society, 1981, short course on Sputter Deposition and Ion Beam Processes sponsored by the American Vacuum Society, 335 East 45th Street, New York, New York and specifically to Chapter VI of the course manual entitled "Coating Deposition by Sputtering" by John A. Thornton; and also to Chapter 4, of the book "Glow Discharge Sources For Sputtering" by W.D. Westwood, at pages 33−36. The platinum is preferably deposited at high temperatures in a reactive environment to obtain the desired grain orientation and purity.

In one preferred example, following cleaning of the surface of substrate 24 and the negatively patterned lift−off medium 28 in Figure 2E, substrate 24 was placed in a Materials Research Corporation, "Sputtersphere" Deposition Machine and preheated to 500°C for a period of 10 minutes. The anode to cathode spacing was set at 50mm (2 inches) and the machine was set for diode radio frequency sputtering. Initial pumpdown to $133 \times 10^{-7} Nm^{-2}$ ($10^{-7}$ torr) was obtained before proceeding. Sputter etching was performed at a power setting of 500 watts for 10 minutes to remove remaining surface contamination, using an atmosphere of substantially pure oxygen (99.97% $0_2$) at an absolute pressure of 3.75 microns. Sputter deposition of 99.99% pure platinum was then performed at a target voltage of 1000 volts with a controlled substrate temperature of about $420^0$C.

The sputtering was performed for 360 minutes to produce a platinum layer 1700nm (17000 Angstroms) thick. The atmosphere was a reactive atmosphere of substantially pure oxygen (99.99% $0_2$) at 3.75 microns absolute pressure. The high substrate temperature for the long period of time of the preferred process, during which time the substrate is kept in a reactive environment, makes it important that substrate 24 and liftoff medium 28 are both substantially inert with respect to platinum and dimensionally stable to retain the required edge and line width definition.

Prior art liftoff medium materials such as photo resist tends to decompose and lose their structural strength, so the path side surfaces lose their shape in such an environment. The decomposition will introduce substantial impurities in the platinum path or pattern, and also the paths will lose definition because the side surfaces will round off at the top and will perhaps erode at irregular locations so the platinum is not well contained or defined. Photo resist materials and prior art liftoff medium materials also tend to diffuse into the platinum. Since the preferred liftoff medium, comprising silicon dioxide, does not react or significantly diffuse in the environment in which the platinum is sputtered, the surfaces 32 and 34 retain their shape and edges 32A and 34A remain sharp line edges, so the platinum path retains the shape defined by the silicon dioxide negative pattern of material.

A table of preferred ranges and acceptable ranges for above described parameters and setting is set forth below:

## TABLE I

|  | PREFERRED | ACCEPTABLE |
|---|---|---|
| Substrate Preheat |  |  |
| Temperature | $500^{O}C$ | $200-500^{O}C$ |
| Anode to Cathode Spacing | 50mm (2") | 25-75mm (1-3") |
| Initial Pumpdown | $133 \times 10^{-7} Nm^{-2}$ |  |
|  |  | $133 \times 10^{-6} Nm^{-2}$ |
|  | $(1 \times 10^{-7}$ Torr) | $(1 \times 10^{-6}$ Torr) |
|  |  | or less |
| Sputter etch Power | 500 Watts | 100-1000 Watts |
| Time | 10 min. | 1-100 min. |
| Oxygen Pressure | 3.75 microns | 1-10 microns |
| Sputter Deposition |  |  |
| Target Voltage | 1000 Volts | 750-1500 Volts |
| Substrate Temperature | $420^{O}C$ | $350-500^{O}C$ |
| Time | 360 min. | 300-600 min. |
| Target Platinum Thickness | 1700nm | 1400nm-3000nm |
|  | (17000A) | (14000A-30000A) |
| Oxygen Pressure | 3.75 microns | 1-10 microns |

Variation of one or two parameters as much as ± 10% can be tolerated so long as the other parameters are maintained, or adjusted so the overall quality of the thermometer does not degrade.

Preferably the platinum sputter deposition is conducted at a slow rate so the deposition time is long enough such that time of sputtering is not a critical factor and precise timing is not required. Stated another way, the time of deposition is capable of being controlled accurately enough for batch processing with repeatable results. Precise control of the thickness of the platinum is therefore easily obtained. Adding to the fact that a precise thickness is not crucial to obtaining desired TCR, it is seen that the platinum deposition step is easily controlled within desired limits to obtain required thickness of the platinum. Therefore, repeatability of the procedure is easily obtained even without overly precise controls on time. The deposited platinum has a columnar grain, as will be described, throughout the length, width and thickness of the strip, and reaches the desired TCR in batch processing.

An important feature of this method is its insensitivity to process variation. When etching away the lift-off medium to form the platinum path pattern, excessive undercutting of surfaces 32 and 34 can be a concern, but undercutting is easily monitored and controlled with known standard etching procedures. When stripping the photo resist used to define the platinum pattern in the lift-off medium, the stripping material disclosed does not adversely affect the lift-off medium or the substrate, so if stripping is continued for too long a time, no adverse effects are noticed. If the final lift-off etching conditions during the process unexpectedly vary, the variation will not likely cause scrapping of the substrate because the etching does not require critical solution strengths or timing. The etching steps must be continued long enough to remove materials which could result in defects.

It is important that materials proximate to the platinum do not react with platinum at high temperatures in a reactive environment or atmosphere so that harmful impurities are not introduced into the platinum.

The platinum layer is deposited to a thickness of approximately 1700nm (17000 Angstroms), which is lot as thick as the thickness (vertical height) of the layer of lift-off medium 28 (approximately 2500nm (25000 Angstroms)). Thus, as shown in Figure 2F, after deposition of the platinum, the resistance thermometer strip or ribbon 12 does not have a thickness or height equal to the full height of the side surfaces 32 and 34 defining the path for the thermometer. Because the edges 32A and 34A do not round off as the deposition progresses, thin bands of porous, interconnecting layer sections 36 and 38 of platinum form along the side surfaces 32 and 34 for the distance that the lift−off medium layer 28 extends outwardly in thickness beyond 1700nm (17000 Angstroms), which is the deposited platinum strip height or thickness in the paths. The bands 36 and 38 form thin porous bands of platinum approximately 800nm (8000 Angstroms) wide adjacent the edges 32A and 34A along the entire path.

Platinum thickness of the platinum thermometer strip deposited in each path may range from 1400nm (14000 Angstroms) to 3000nm (30000 Angstroms) if desired, provided the thickness of the lift−off medium 28 is correspondingly changed so that it is always thicker than the desired thickness of the platinum strip. The lift−off medium 28 preferably has a thickness of at least 1.3 to 1.5 times the thickness (height above surface 26) of the platinum that is deposited.

The thin band sections of platinum 36 and 38 are generally sufficiently porous so that a liquid etchant will penetrate the thin strip layer sections. An etchant such as hydrofluoric acid, which has little effect on either platinum or the substrate 24, is then used to etch away the remaining parts of the lift−off medium. Since the etchant has little effect on the platinum or substrate the timing and temperature of the etch of the final lift−off medium is non−critical and has little effect on the yield of acceptable thermometers from a substrate, that is, normal variations in time and temperature of the final etchant will not result in an increased scrap rate. After etching all of the liftoff medium away, the portions of the platinum layer indicated at 40 which were deposited on top of the liftoff medium may be mechanically separated from the upper edges of the platinum thermometer strip or ribbon 12 in the region of the thin bands 36 and 38. This can be accomplished by lifting the sections 40 or by rubbing the platinum with a suitable pad to break off sections 40. The thermometer strip or ribbon 12 is tightly bonded to the substrate surface so it will not come loose. The thin platinum bands 36 and 38 are also rubbed to remove any thin or irregular edges on the strip 12, which would tend to break off in use and change the overall resistance of thermometer 10. Figure 2G illustrates the device at this point in the process.

An optional step may be performed to aid etching away the liftoff medium if desired. Before liftoff medium 28 is etched away, a mild platinum etch may be used to etch the thin bands 36 and 38 for approximately five to fifteen minutes with, for example, a solution consisting of $10H_2O$: 9HCl: $1HNO_3$. The thickness of the platinum strip 12 on substrate surface 26 is not appreciably affected by such mild etch, but the thin bands 36 and 38 are substantially removed during such an etch step because the bands are very thin and porous as compared to the thermometer strip or ribbon 12 secured to substrate surface 26. When the thin bands 36 and 38 are substantially removed by the optional platinum etch, lift−off medium 28 in the negative pattern is then etched away as described above and the platinum layer sections 40 are easily removed because they will be loose, and can be blown off by a gas flow across substrate surface 26.

Thermometer 10 is then cleaned as desired, and is then heat treated for approximately six hours at a temperature of 1000ºC in an oxygen atmosphere. The heat treatment does not remove the columnar crystal structure, but only compacts the film. Thus, during heat treatment, the thickness of platinum strip or ribbon 12 above the substrate surface decreases to approximately one half of the deposited thickness (700nm (7000 Angstroms) to 1500nm (15000 Angstroms)), and the conductivity of the platinum strip or ribbon 12 increases. The heat treatment temperature may vary from 8000º to 1000ºC and the thermometer is heat treated for between five and seven hours.

It has been found that a platinum strip thickness (above the substrate) after heat treatment of at least 700nm (7000 Angstroms) provides the desired TCR. During initial heat treatment, the TCR and the platinum resistivity change quickly, but then change relatively slowly toward the end of the heat treatment so that the TCR and platinum resistivity do not vary significantly from batch to batch, with reasonable time controls.

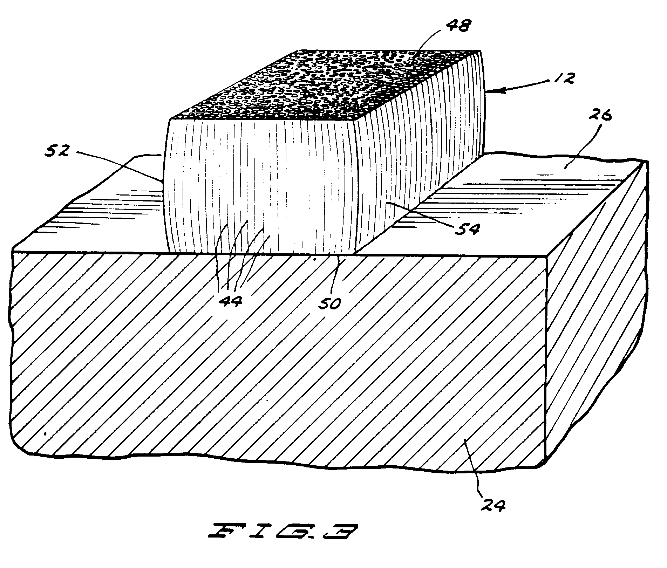

In Figure 3, wherein the numbering is consistent with the foregoing figures, the structure of the platinum strip or ribbon 12 is shown in enlarged cross section, and when the platinum is deposited as described comprises closely packed columnar grains 44 of platinum. The grains 44 are preferably substantially continuous in length in the thickness or height direction of the strip, and have longitudinal axes normal to substrate surface 26. A substantial portion of the grains are continuous if the sputtering is done carefully as described. The platinum strip structure comprises a top surface 48, a bottom surface 50, which is bonded or secured to or interfaced with substrate surface 26, a first side surface 52 and a second side surface 54. First side surface 52 and second side surface 54 are smooth, but curve very slightly outwardly (they are convex) corresponding to the slight inward curve or concavity of surfaces 32 and 34 of the liftoff medium.

The columnar grains 44 are uniformly dispersed substantially over the entire section of strip or ribbon 12 out to first side surface 52, and to second side surface 54, due to the structural stability of the liftoff medium during deposition of the platinum. Thus, substantially the entire strip has the columnar grain. The paths for the platinum strip or ribbon 12 remain sharply defined in the liftoff medium during deposition of the platinum.

Since the liftoff medium 28 is inert with respect to platinum and dimensionally stable in the sputtering environment, few impurities or structural defects occur at first and second side surfaces 52 and 54. Thus, first and second side surfaces 52 and 54 are well defined, smooth, and are substantially normal to substrate surface 26. This provides yet a further benefit in that the platinum paths may be formed or placed closer together, so that the platinum strips are closer together. If the sides of the paths in the liftoff medium exhibit significant lateral protrusions, are not structurally intact, or tend to spread out over the surface of the substrate as the platinum is deposited, there is an increased probability of electrically shorting between the sections of the strip or ribbon formed in the paths. With the structure of platinum shown in Figure 3, the desired TCR is obtained and a smaller thermometer size is achieved because of the well defined sides of the strip or ribbon sections. A platinum strip width of 20 micrometers with a distance of 20 micrometers between the strip sections is easily batch fabricated using the above described liftoff technique.

The liftoff technique permits smaller thermometer size regardless whether the platinum is deposited in a columnar structure or not. Because of the non−reactive structurally stable materials used for the liftoff medium that defines the paths, the side surfaces of each path are well defined and substantially free of impurities. If the side surfaces have impurities or are not well defined, the TCR of the deposited platinum will be lowered. Of course, the bulk or volume of the platinum is an important consideration for achieving the TCR.

With low levels of impurities in the platinum, the platinum strip thickness must be increased to increase the TCR. With increased thickness of the strip 12, the sheet resistivity decreases and the strips must be made narrower, or longer, to obtain the desired operating resistance for the thermometer. Prior means of pattern definition introduce substantial impurities in the platinum along the edges. Hence making the pattern narrower with prior processes introduced more impurities and further lowered the TCR. Thus, a longer, more extensive strip or ribbon pattern was needed to obtain desired resistances and TCR's in prior art devices. With high levels of impurities in the platinum the thermometer will never reach the desired TCR.

The added benefit of the columnar platinum grain structure is that even more control of the TCR is obtained with excellent repeatability. The precise thickness of the platinum layer having the columnar grain structure is not significant with respect to the TCR of the strip or ribbon in the selected range of platinum thicknesses. Thus precise timing of the platinum deposition is not required, and successful processing of each batch is greatly enhanced under commercial conditions.

Although the present invention has been described with reference to preferred embodiments, workers skilled in the art will recognize that changes may be made in form and detail without departing from the scope of the invention.

## Claims

1. A batch fabricated thin film platinum resistance thermometer comprising:
   substrate means having a surface for supporting the platinum; and
   a resistive serpentine strip pattern formed on the surface of the substrate means having a strip length, a predetermined thickness and edges defining a width of the strip pattern, characterized by the pattern comprising a substantially uniform structure of closely spaced columnar grains of platinum throughout the length, thickness and width of the strip pattern, the grains of platinum having longitudinal axes substantially normal to the substrate surface, said structure being sufficiently free of defects about its edges, to provide sufficiently sharply defined edges which result in side surfaces which are substantially normal to the substrate surface.

2. The resistance thermometer of Claim 1 further characterized by the edges of the strip being defined by smooth edge surfaces of a path forming medium.

3. The resistance thermometer of Claim 1 further characterized by a substantial portion of the grains of platinum being continuous throughout the thickness of the strip.

4. The resistance thermometer of Claim 3 further characterized by the separation of the strip sections being 20 micrometers.

5. The resistance thermometer of any one of the preceding claims further characterized by platinum being deposited on the substrate means to a thickness of between 1400nm (14,000 Angstroms) and 3000nm (30,000 Angstroms).

6. A process for making a thin film resistance thermometer of a resistive material comprising the steps of:
providing a substrate having an upper surface;
depositing a layer of liftoff medium which is substantially inert to the resistive material onto the substrate surface to leave an exposed surface of liftoff medium, and removing portions of the liftoff medium to expose the substrate surface in a path defined through the liftoff medium comprising a negative pattern from a predetermined pattern desired for the resistance thermometer, the method characterized by depositing platinum on the exposed portions of the substrate and on the exposed surface of the liftoff medium, to form columnar grains of platinum in the path, and removing the liftoff medium and platinum deposited on the liftoff medium while leaving the platinum secured to the exposed substrate surface in the path, the columnar grains of platinum in the path remaining substantially uncontaminated by the liftoff medium.

7. The process of Claim 6 further characterized by the steps of first depositing the liftoff medium onto the entire substrate surface and by the step of removing comprising etching away the liftoff medium to define the path with etched side surfaces extending upwardly from the substrate surface.

8. The process of Claims 6 or 7 wherein the step of removing the liftoff medium and platinum deposited thereon comprises etching the liftoff medium away from the substrate after depositing the platinum and thereafter removing the platinum not in the defined paths.

9. The process of Claim 8 further characterized by the platinum being deposited in the path to a thickness less than the thickness of the liftoff medium so the side surfaces defining the path in the liftoff medium extend upwardly more than the thickness of the deposited platinum to thereby cause porous strips of the deposited platinum to be formed adjacent the outermost portion of such side surfaces for permitting liquid etch to be used for removing the liftoff medium.

10. The process of any one of the preceding claims wherein the platinum is sputter deposited onto the substrate in a reactive atmosphere under high temperatures at a slow rate to provide columnar grain platinum oriented generally normal to the substrate surface in a process wherein time control is not critical.

11. The process of Claim 10 wherein the liftoff medium is selected to resist reaction with and diffusion into the atmosphere used for depositing the platinum to retain sharp edges along the path and to maintain side surfaces of the path substantially perpendicular to the substrate throughout the exposure to the resistive material deposition environment at temperatures to 500ºC.

12. The process of any one of Claims 6 to 11 further characterized by the liftoff medium comprising substantially pure silicon dioxide.

13. The process of Claim 12 further characterized by the silicon dioxide being chemical vapor deposited from silane and oxygen sources.

**Patentansprüche**

1. In Serie hergestelltes Dünnfilm – Platin – Widerstandsthermometer, mit:
einer Substratvorrichtung mit einer Oberfläche für die Abstützung des Platins; und
einem Widerstands – Serpentinen – Streifenmuster, das auf der Oberfläche der Substratvorrichtung mit einer Streifen– länge, einer vorgegebenen Stärke und Kanten ausgebildet ist, die eine Breite des Streifenmusters festlegen, dadurch gekennzeichnet, daß das Muster eine im wesentliche einheitliche Struktur von nah beabstandeten säulenförmigen Platinkörnern oder – gefüge über die Länge, Dicke und Breite des Streifenmusters aufweist, wobei die Platinkörner oder – gefüge Längsachsen aufweisen, die im wesentliche normal zu der Substratoberfläche sind, wobei die Struktur ausreichend frei von Defekten um ihre Kanten ist, um eine ausreichend scharf begrenzte Kante festzulegen, die zu Seitenoberflächen führt, die im wesentlichen normal zu der Substratoberfläche sind.

2. Widerstandsthermometer nach Anspruch 1, weiter dadurch gekennzeichnet, daß die Kanten des Streifens durch glatte Kantenoberflächen eines bahnbildenden Mediums festgelegt sind.

**3.** Widerstandsthermometer nach Anspruch 1, weiter dadurch gekennzeichnet, daß ein wesentlicher Bereich der Körner oder des Gefüges des Platin kontinuierlich über die Stärke des Streifens ist.

**4.** Widerstandsthermometer nach Anspruch 3, weiter dadurch gekennzeichnet, daß die Trennung der Streifenabschnitte 20 $\mu$m beträgt.

**5.** Widerstandsthermometer nach einem der vorhergehenden Ansprüche, weiter dadurch gekennzeichnet, daß Platin auf der Substratvorrichtung in einer Stärke zwischen 1400 mm (14.000 Å) und 3000 nm (30.000 Å) aufgetragen ist.

**6.** Verfahren zur Herstellung eines Dünnschicht – Widerstands – Thermometers aus einem Widerstands – material, welches Verfahren die Schritte aufweist:
Schaffung eines Substrats mit einer oberen Oberfläche;
Aufbringen einer Schicht aus Abhebemedium, das im wesentlichen inert gegenüber dem Wider – standsmaterial ist, auf die Substratoberfläche, um eine freiliegende Oberfläche des Abhebemediums zu belassen, und Entfernung von Bereichen des Abhebemediums, um die Substratoberfläche in einer Bahm freizulegen, die durch das Abhebemedium festgelegt ist, die ein gegenüber einem vorgegebe – nen, für das Widerstandsthermometer gewünschten Muster negatives Muster aufweist, wobei das Verfahren dadurch gekennzeichnet ist, daß Platin auf die freigelegten Bereiche des Substrats und auf die freiliegenden Bereiche des Abhebemediums aufgetragen wird, um ein säulenförmiges Gefüge bzw. säulenförmige Körner aus Platin in der Bahn zu bilden und das Abhebemedium und das auf dem Abhebemedium aufgebrachte Platin zu entfernen, während das auf der freigelegten Substratoberfläche in der Bahn befestigte Platin belassen wird, wobei die säulenförmigen Körner bzw. Gefüge des Platins in der Bahn im wesentlichen unverunreinigt durch das Abhebemedium verbleiben.

**7.** Verfahren nach Anspruch 6, weiter gekennzeichnet durch die Schritte, daß zunächst das Abhebemedi – um auf der gesamten Substratoberfläche aufgetragen wird und daß der Schritt des Entfernens ein Wegätzen des Abhebemediums aufweist, um die Bahn festzulegen, wobei die geätzten Seitenoberflä – chen sich von der Substratoberfläche nach oben erstrecken.

**8.** Verfahren nach Anspruch 6 oder 7, weiter gekennzeichnet durch die Schritte, daß der Schritt der Entfernung des Abhebemediums und des auf diesem aufgebrachten Platins das Wegätzen des Abhebemediums von dem Substrat aufweist, nachdem das Platin aufgebracht wurde, und danach das nicht in den vorgesehenen Bahnen befindliche Platin entfernt wird.

**9.** Verfahren nach Anspruch 8, weiter dadurch gekennzeichnet, daß das Platin in der Bahn auf eine Stärke weniger als die Dicke des Abhebemediums aufgebracht wird, so daß die Seitenoberflächen, die die Bahn in dem Abhebemedium festlegen, sich nach oben über mehr als die Stärke des aufgebrachten Platins erstrecken, um dadurch poröse Streifen des aufgebrachten Platins zu erzeugen, die angrenzend an den äußersten Bereich derartiger Seitenoberflächen auszubilden sind, um eine Flüssigkeitsätzung zu ermöglichen, die für das Entfernen des Abhebemediums zu verwenden ist.

**10.** Verfahren nach einem der vorhergehenden Ansprüche, dadurch gekennzeichnet, daß Platin auf das Substrat in einer reaktiven Atmosphäre unter hohen Temperaturen mit einer geringen Aufdampfrate aufgedampft wird, um Platin mit einem säulenförmigen Gefüge bzw. mit säulenförmigen Körnern zu schaffen, das bzw. die im wesentlichen normal zu der Substratoberfläche in einem Prozeß ausgerichtet wird, in welchem die Zeitsteuerung nicht kritisch ist.

**11.** Verfahren nach Anspruch 10, dadurch gekennzeichnet, daß das Abhebemedium so ausgewählt wird, das es der Reaktion mit und der Diffusion in die Atmosphäre widersteht, die für die Aufbringung des Platins verwendet wird, um scharfe Kanten entlang der Bahn beizubehalten und um die Seitenflächen der Bahn im wesentlichen senkrecht zum Substrat aufrechtzuerhalten, während das Widerstandsmate – rial der Aufbringumgebung bei Temperaturen bis 500°C ausgesetzt wird.

**12.** Verfahren nach einem der Ansprüche 6 bis 11, weiter dadurch gekennzeichnet, daß das Abhebemedi – um im wesentlichen reines Siliziumdioxid aufweist.

**13.** Verfahren nach Anspruch 12, weiter dadurch gekennzeichnet, daß das Siliziumdioxid aus Siliziumwas – serstoff und Sauerstoffquellen in einem chemischen Verfahren aufgedampft wird.

## Revendications

**1.** Thermomètre à résistance en platine à couche mince fabriqué par lots comprenant :

un substrat présentant une surface destinée à supporter le platine; et

un motif de bande sinuaux résistif formé sur la surface du substrat, présentant une longueur de bande, une épaisseur prédéterminée et des bords définissant une largeur du motif de bande, caractérisé en ce que le motif comprend une structure en substance uniforme de grains basaltiques de platine serrés les uns contre les autres sur toute la longueur, l'épaisseur et la largeur du motif de bande, les grains de platine ayant des axes longitudinaux en substance perpendiculaires à la surface du substrat, la structure étant suffisamment dépourvue de défauts, au voisinage de ses bords, pour fournir dos bords assez bien définis qui donnent des surfaces latérales en substance perpendiculaires à la surface du substrat.

**2.** Thermomètre à résistance suivant la revendication 1, caractérisé en outre en ce que les bords de la bande sont définis par des surfaces de bords lisses d'un agent formant une piste.

**3.** Thermomètre à résistance suivant la revendication 1, caractérisé en outre en ce qu'une partie substantielle des grains de platine sont des grains continus dans la totalité de l'épaisseur de la bande.

**4.** Thermomètre à résistance suivant la revendication 3, caractérisé en outre en ce que la séparation des sections de bande est de 20 micromètres.

**5.** Thermomètre à résistance suivant l'une quelconque des revendications précédentes, caractérisé en outre en ce que du platine est déposé sur le substrat jusqu'à une épaisseur comprise entre 1400 nm (14 000 angstroms) et 3000 nm (30 000 angstroms).

**6.** Procédé pour fabriquer un thermomètre à résistance à couche mince en une matière résistive comprenant les étapes consistant à :

fournir un substrat comportant une surface supérieure;

déposer une couche d'agent de décollement en substance inerte à l'égard de la matière résistive sur la surface du substrat afin de laisser une surface exposée d'agent de décollement, et éliminer des parties de l'agent de décollement pour exposer la surface du substrat suivant une piste définie à travers l'agent de décollement comprenant un motif négatif d'un motif prédéterminé souhaité pour le thermomètre à résistance, ce procédé étant caractérisé en ce qu'on dépose du platine sur les parties exposées du substrat et sur la surface exposée de l'agent de décollement pour former des grains basaltiques de platine dans la piste, et on élimine l'agent de décollement et le platine déposé sur l'agent de décollement tout en laissant le platine fixé à la surface exposée du substrat dans la piste, les grains basaltiques de platine dans la piste restant en substance non contaminés par l'agent de décollement.

**7.** Procédé suivant la revendication 6, caractérisé en outre par l'étape de dépôt consistant tout d'abord à déposer l'agent de décollement sur la totalité de la surface du substrat et par l'étape d'élimination consistant à éliminer par attaque chimique l'agent de décollement pour définir la piste présentant des surfaces latérales formées par l'attaque chimique qui s'étendent vers le haut à partir de la surface du substrat.

**8.** Procédé suivant la revendication 6 ou 7, dans lequel l'étape consistant à éliminer l'agent de décolle – ment et le platine déposé sur celui – ci comprend l'attaque chimique de l'agent de décollement pour l'éliminer du substrat après le dépôt du platine suivie de l'élimination du platine qui ne se trouve pas dans les pistes définies.

**9.** Procédé suivant la revendication 8, caractérisé an outre en ce que le platine est déposé dans la piste jusqu'à une épaisseur inférieure à l'épaisseur de l'agent de décollement de sorte que les surfaces latérales définissant le trajet dans l'agent de décollement s'étendent vers le haut sur plus de l'épaisseur du platine déposé afin d'amener des bandes poreuses du platine déposé à être formées à proximité de la partie extérieure extrême de ces surfaces latérales pour permettre l'utilisation d'une attaque chimique à l'acide pour éliminer l'agent de décollement.

10. Procédé suivant l'une quelconque des revendications précédentes, dans lequel le platine est déposé par pulvérisation sur le substrat dans une atmosphère réactive sous des températures élevées à une allure lente pour fournir du platine à grains basaltiques orienté en substance perpendiculairement à la surface du substrat dans un processus dans lequel la maîtrise du temps n'est pas critique.

11. Procédé suivant la revendication 10, dans lequel l'agent de décollement est choisi pour résister à une réaction avec et une diffusion dans l'atmosphère utilisée pour déposer le platine en vue de préserver des bords vifs le long de la piste et de maintenir des surfaces latérales de la piste en substance perpendiculaires au substrat pendant toute l'exposition au milieu de dépôt de la matière résistive, à des températures allant jusqu' 500°C.

12. Procédé suivant l'une quelconque des revendications 6 à 11 caractérisé en outre en ce que l'agent de décollement comprend du dioxyde de silicium en substance pur.

13. Procédé suivant la revendication 12, caractérisé en outre en ce que le dioxyde de silicium fait l'objet d'un dépôt chimique en phase vapeur à partir de sources de silane et d'oxygène.

EP 0 191 052 B1

FIG. 2

15

FIG. 2A

FIG. 2B

FIG. 2C

FIG. 2D

FIG. 2E

FIG. 2F

FIG. 2G

FIG.3